# DEMANDE DE BREVET EUROPEEN

(11) **EP 3 273 148 A1**
(43) Date de publication de la demande: **24.01.2018**
(21) Numéro de dépôt: 17181289.4
(22) Date de dépôt: 13.07.2017
(51) Int. Cl.: F21S 41/37, F21S 41/39, F21S 41/19, F21S 41/16, F21S 41/148, F21S 45/47

(54) **PROJECTEUR DE LUMIERE DE VEHICULE**

(30) Priorité: 22.07.2016 FR 1657059
(71) Demandeur: Valeo Vision, 93012 Bobigny Cedex (FR)
(72) Inventeur: ROUCOULES, Christine, 93012 Bobigny Cedex (FR)

(57) **Abrégé**

L'invention se rapporte notamment à un projecteur (20) de lumière de véhicule comprenant au moins un boîtier (22), au moins un support (16-18) de source lumineuse (12) situé à l'intérieur du boîtier, un système de réglage en position de la source lumineuse par rapport au véhicule, et un système d'évacuation de chaleur (24,25-28), depuis l'intérieur (43) du boîtier vers l'extérieur (49) du boîtier.

L'invention offre ainsi un projecteur de lumière amélioré.

## Description

### DOMAINE DE L'INVENTION

L'invention se rapporte au domaine des projecteurs de lumière de véhicule, c'est-à-dire des dispositifs permettant, lors de la conduite du véhicule, de projeter de la lumière éclairant la route et/ou permettant au véhicule de se rendre plus visible, tels les feux de position ou les feux de croisement et/ou route (communément appelés « phares »).

### ARRIERE-PLAN

Les projecteurs de lumière de véhicule comprennent un boîtier intégrant différents composants, dont, lors de l'utilisation du projecteur, une source lumineuse. Au moins une partie des différents composants génèrent de la chaleur lors de leur utilisation, ce qui entraîne une élévation de la température au niveau des composants qui peut dégrader les composants et/ou en empêcher une utilisation optimale. Différentes solutions tentent de remédier à ce problème. C'est le cas par exemple des solutions décrites dans le document US 2011310631 A, dans le document US 2006076572 A, dans le document US 20100296308 A, dans le document DE 102011120123 A1, dans le document US 2015168555 A, dans le document CN 103807719 A, ou encore dans le document CN 203823623 U.

Les solutions précitées ne sont toutefois pas optimales, notamment par rapport à l'évolution des performances des projecteurs modernes et à la quantité de chaleur que leurs composants génèrent, et la chaleur autour des composants à l'intérieur du boîtier n'est donc pas suffisamment dissipée.

### RESUME DE L'INVENTION

On propose donc un projecteur de lumière de véhicule comprenant au moins un boîtier, au moins un support de source lumineuse situé à l'intérieur du boîtier, un système de réglage en position de la source lumineuse par rapport au véhicule, et un système d'évacuation de chaleur, depuis l'intérieur du boîtier vers l'extérieur du boîtier.

Selon différents modes de réalisation, le projecteur peut comprendre l'une ou plusieurs des caractéristiques suivantes combinées entre elles :
- le système d'évacuation de chaleur comprend un système de communication de chaleur flexible ;
- le système d'évacuation de chaleur comprend au moins un échangeur de chaleur par fluide et un système de communication de chaleur reliant le support de source lumineuse et l'échangeur de chaleur par fluide ;
- l'échangeur de chaleur par fluide est un échangeur de chaleur par liquide ;
- l'échangeur de chaleur par fluide comprend un système de connexion à un circuit de refroidissement ;
- le circuit de refroidissement est une boucle de refroidissement basse température du véhicule;
- l'échangeur de chaleur par fluide comprend une plaque froide ;
- la plaque froide est située à l'extérieur du boîtier ou forme une paroi du boîtier;
- l'échangeur de chaleur par fluide est fixe par rapport au véhicule, le système de communication de chaleur étant flexible ;
- l'échangeur de chaleur par fluide est fixe par rapport au support de source lumineuse, le système de communication de chaleur étant flexible ou rigide ;
- le système de communication de chaleur comprend un caloduc et/ou un circuit de circulation de fluide ; et/ou
- le projecteur comprend deux supports de source lumineuse, les supports de source lumineuse étant situés tous deux à l'intérieur d'un même boîtier ou chacun à l'intérieur d'un boîtier respectif, et/ou le projecteur comprenant un échangeur de chaleur par fluide commun aux deux supports de source lumineuse ou un échangeur de chaleur par fluide respectif pour chaque support de source lumineuse.

### BREVE DESCRIPTION DES FIGURES

D'autres caractéristiques et avantages de l'invention apparaîtront à la lecture de la description détaillée qui suit de l'invention, donnée à titre d'exemple et en référence aux dessins annexés, dans lesquels :
- La FIG. 1 montre schématiquement un exemple du support de source lumineuse avec une source lumineuse montée sur le support ; et
- Les FIGS. 2-5 montrent schématiquement différents exemples du projecteur.

### DESCRIPTION DETAILLEE

On propose un projecteur de lumière de véhicule, ainsi qu'un véhicule terrestre intégrant une ou plusieurs versions d'un tel projecteur (par exemple deux versions à l'avant pour un véhicule quatre roues, ou une ou deux versions à l'avant pour un véhicule deux ou trois roues), par exemple selon l'une ou plusieurs des différentes modalités d'intégration décrites plus tard. Le projecteur comprend au moins un boîtier et au moins un support de source lumineuse situé à l'intérieur du boîtier. Le projecteur peut donc comprendre en outre une telle source lumineuse, par exemple une source lumineuse montée sur chaque support respectif, le support de source lumineuse étant adapté au montage et au débattement fonctionnelle d'une source lumineuse à l'intérieur du boîtier pour permettre l'éclairage lors de l'utilisation du projecteur (un tel montage pouvant se faire à tout moment, par exemple en usine et/ou ultérieurement). Le projecteur comprend en outre un système de réglage en position de la source lumineuse par rapport au véhicule (ce qui implique que la position de l'éclairage n'est pas définitivement fixée en usine et peut donc simplement être modifiée ultérieurement). Dans le cas de plusieurs supports et donc de plusieurs sources lumineuses, le projecteur comprend un tel système de réglage pour chaque support car la source lumineuse est prévue pour être réglable en position par rapport au véhicule, ou bien un système de réglage commun pour tous ces supports, le réglage pouvant dans les deux cas être réalisé indépendamment ou au contraire de manière interdépendante (e. g. solidairement) pour toutes ces sources lumineuses. Le projecteur comprend également un système d'évacuation de chaleur depuis l'intérieur du boîtier vers l'extérieur du boîtier.

Une telle configuration avec un tel système d'évacuation de chaleur permet, pour un projecteur dont l'éclairage est réglable en position par rapport au véhicule, une dissipation efficace de la chaleur générée et présente autour des composants lors de l'utilisation du projecteur. Cela réduit la dégradation des composants à l'intérieur du boîtier (dont le support de source lumineuse et la source lumineuse) et cela permet une utilisation optimale de ces composants (étant donné notamment que les sources lumineuses des projecteurs de lumière de véhicule offrent un éclairage optimal lorsque la température est relativement basse).

Le véhicule peut être tout type de véhicule terrestre, par exemple une automobile, une motocyclette, ou un camion. Le projecteur comprend des moyens de fixation, par exemple par emboîtement ou encastrement, dans une zone du véhicule prévue à cet effet. Les moyens de fixation sont adaptés, en termes de taille, de caractéristiques mécaniques, et/ou de rigidité de la fixation, au type de véhicule motorisé et/ou aux vitesses atteignables par le véhicule. La zone (ou ossature) du véhicule prévue pour accueillir le projecteur peut former une carcasse autour du projecteur protégeant le projecteur de la chaleur du moteur. Le projecteur de lumière présente au moins une portion non opaque (qui peut comprendre une lentille) du boitier, en ce sens qu'après une telle fixation, la lumière émise par la source lumineuse peut être projetée vers l'extérieur du boîtier de sorte à assurer l'éclairage de la route lors de la conduite.

En outre, le projecteur de lumière comprend un boitier avec des moyens formant, au moins après une telle fixation, une enceinte et incluant l'intérieur du boîtier et donc le support de source lumineuse (ainsi que la source lumineuse montée sur le support le cas échéant). Par exemple, le projecteur de lumière comprend une paroi étanche fermée, l'intérieur du boîtier formant ainsi par lui-même l'enceinte étanche. Dans un autre exemple, le boîtier comprend une paroi étanche ouverte qui peut être reliée de manière étanche à une surface étanche de la zone du véhicule prévue pour accueillir le projecteur (et géométriquement complémentaire à l'ouverture de la paroi). Dans tous les cas, au moins après fixation du projecteur, l'intérieur du boîtier définit un volume étanche à l'extérieur, de sorte que les composants qui s'y trouvent (comme le support de source lumineuse et, le cas échéant, la source lumineuse) sont protégés de l'extérieur, notamment de la pluie et/ou des impuretés.

Comme indiqué précédemment, différentes solutions existent dans l'art antérieur pour dissiper la chaleur au niveau des composants à l'intérieur du boîtier qui dégagent de la chaleur lors de leur utilisation, en particulier la source lumineuse et son support. Toutefois, les solutions existantes consistent principalement à évacuer la chaleur vers une zone plus froide du boîtier. Or, l'étanchéité mentionnée ci-dessus entraîne un confinement à l'intérieur du boîtier de la chaleur dégagée par les composants, quand bien même cette chaleur est transportée vers d'autres zones du boîtier. La chaleur s'accumulant dans le boîtier peut alors devenir trop élevée.

On propose donc, en supplément ou en remplacement de ces solutions, que le projecteur comprenne un système d'évacuation de chaleur depuis l'intérieur du boîtier vers l'extérieur du boîtier. Ce système d'évacuation peut être tout système qui évacue la chaleur au moins en partie vers l'extérieur du boîtier, un tel flux de chaleur étant strictement supérieur (en termes d'intensité) au simple flux découlant de la convection naturelle et de l'échange de chaleur au niveau des parois du boîtier. Une telle architecture du projecteur permet donc d'améliorer la dissipation de la chaleur générée par ses composants loin desdits composants, et ce à moindre coût en termes de complexité matérielle et donc d'installation du projecteur.

Par ailleurs, le projecteur de lumière comprend un système de réglage en position de la source lumineuse par rapport au véhicule. Un tel système de réglage permet le réglage horizontal et/ou vertical du faisceau de lumière généré par une source lumineuse du projecteur. Le réglage peut être fait par actionnement de différents éléments mécaniques. Par exemple, le système de réglage du projecteur peut comprendre des éléments mécaniques de positionnement reliés aux supports de toutes les sources lumineuses réglables en position. Le boîtier peut dans ce cas être prévu pour être assemblé au véhicule de manière fixe par rapport au véhicule, et les sources lumineuses peuvent elles-mêmes être fixes (c'est-à-dire de position non réglable) chacune par rapport à leur support respectif. Les éléments mécaniques de positionnement peuvent alors être configurés pour régler la position des supports (indépendamment ou de manière interdépendante, par exemple solidairement, c'est-à-dire que lorsque la position d'un support est modifiée la position du ou des autre(s) support(s) solidaire(s) est modifiée de la même quantité), de sorte à indirectement régler la position de la source lumineuse et donc le faisceau de lumière projeté.

Or, l'amélioration de la dissipation de chaleur proposée est d'autant plus utile que le projecteur comprend un tel système de réglage en position de la source lumineuse par rapport au véhicule.

Le système d'évacuation de chaleur peut comprendre un système de communication de chaleur flexible. Le système de communication de chaleur flexible peut être tout élément (e. g. définissant une portion) du système d'évacuation de chaleur qui présente une souplesse mécanique et qui est configuré pour communiquer de la chaleur sur une distance. Lorsque le projecteur est monté sur le véhicule, le système d'évacuation de chaleur peut former un trajet d'évacuation de la chaleur depuis un point A à l'intérieur du boîtier où elle est générée (par exemple le support de source lumineuse) vers un point B extérieur au boîtier et fixe par rapport au véhicule. Le point B peut par exemple (comme il sera discuté plus tard) être un point lié et fixe par rapport à un échangeur de chaleur par fluide, tel qu'un échangeur de chaleur par liquide, lui-même fixe par rapport au véhicule et/ou un élément mécanique quelconque fixe par rapport au véhicule, par exemple un circuit de refroidissement du véhicule (l'évacuation pouvant alors dans ce cas se faire via un échangeur de chaleur par fluide (tel que mentionné ci-dessus) se trouvant par exemple sur le trajet d'évacuation de la chaleur entre le point A et le point B, l'échangeur pouvant dans ce cas ne pas être fixe -c'est-à-dire libre, i.e. pouvant bouger souplement- par rapport au véhicule). La flexibilité du système de communication de chaleur permet alors au système d'évacuation de chaleur de ne pas gêner la liberté de mouvement de la source lumineuse (qui est par exemple fixe par rapport au point A) par rapport au véhicule, requise pour le réglage en position de la source lumineuse par rapport au véhicule.

Un tel système de communication de chaleur flexible peut comprendre au moins une partie d'un système de communication de chaleur qui relie le support de source lumineuse et l'échangeur de chaleur par fluide, par exemple par liquide (et discuté précédemment), par exemple un caloduc flexible ou un circuit de circulation de fluide (par exemple liquide) flexible (par exemple au moins deux tuyaux flexibles). Alternativement ou de manière additionnelle, le système de communication de chaleur flexible peut comprendre au moins une partie d'un système de connexion (par exemple d'un échangeur de chaleur) à un circuit de refroidissement du véhicule, par exemple un circuit de circulation de fluide (par exemple liquide) flexible (par exemple au moins deux tuyaux flexibles).

Le projecteur peut comprendre une source lumineuse ayant une fonction de feu de position, une source lumineuse ayant une fonction de feu de croisement, une source lumineuse ayant une fonction de feu de route, et/ou une ou plusieurs source(s) lumineuse(s) ayant toute combinaison des fonctions précédentes. Dans un exemple, le projecteur comprend une source lumineuse ayant une fonction de feu de position et une source lumineuse ayant à la fois une fonction de feu de croisement et une fonction de feu de route.

En effet, ces types de feux qui nécessitent, notamment en raison des législations, qu'un utilisateur puisse les régler simplement en position hors usine (à l'inverse par exemple des feux antibrouillards, dont la position est figée en usine) ont dans leurs versions récentes un nombre relativement élevé de composants électroniques concentrés au même endroit (en particulier proches de la source lumineuse). En outre, leurs composants électroniques et leur source lumineuse peuvent être relativement puissants et donc dissiper une chaleur relativement importante. Egalement, leur source lumineuse peut être particulièrement sensible à la température ambiante pour son bon fonctionnement.

Par exemple, le projecteur de lumière peut comprendre à l'intérieur du boîtier de l'électronique de traitement, par exemple intégrée à un module intégrant également le support ou intégrée au support de source lumineuse lui-même. L'électronique de traitement peut avoir une fonction de code, une fonction de route et/ou une fonction anti-éblouissement en roulage route. En outre ou alternativement, le support peut être configuré pour le montage d'une ou plusieurs source(s) lumineuse(s) constituée(s) d'un système de diode émettrice de lumière, et le support peut être configuré pour fonctionner à une densité d'énergie supérieure à 50mW/cm² (par exemple de l'ordre de 100mW/cm²). Le système d'évacuation de chaleur depuis l'intérieur du boîtier vers l'extérieur du boîtier est donc d'une utilité particulière car il répond au problème de concentration de chaleur à l'intérieur du boîtier particulièrement gênant dans le contexte spécifique d'un tel projecteur, où les moyens de refroidissement conventionnels (par exemple avec radiateur refroidi en convection naturelle) sont insuffisants. En effet, un problème dans ce contexte est que le confinement de la source de lumière et les composants électroniques permettant d'assurer les multiples fonctions route d'aide à la conduite associées à des fonctions de base de signalisation (feu de position, clignotant par exemple)font que l'air ambiant dépasse souvent des températures de 80°C dans les conditions extrêmes des températures externes pour des puissances dissipées supérieures à 50W. Or, pour avoir un flux optique optimisé, il convient que la température à l'intérieur du boîtier soit le plus souvent possible dans la plage de température externe entre 35°C et 70°C. Le système d'évacuation de chaleur peut être configuré pour assurer cela, tout en respectant les contraintes spécifiques du projecteur (i.e. réglage en position possible, pas de poussière, et pas de contamination du milieu externe sur le module optique).

Dans un exemple, le projecteur comprend un module optique qui inclut une plaque ou tranche (wafer) de semi-conducteur, par exemple silicium, avec une ou plusieurs zone(s) configurée(s) pour accueillir une source lumineuse, constituée d'une ou plusieurs sources éclairantes, de dimension supérieure à 1mm², la plaque intégrant également un circuit intégré, par exemple un circuit intégré propre à une application (ASIC). La plaque peut être fixée à un dissipateur thermique. Le dissipateur thermique peut être fait d'un matériau à haute conduction thermique ou d'un caloduc plat. L'ensemble comprenant la plaque, le circuit intégré et l'éventuel dissipateur constituent ainsi un ou plusieurs support(s) de source lumineuse.

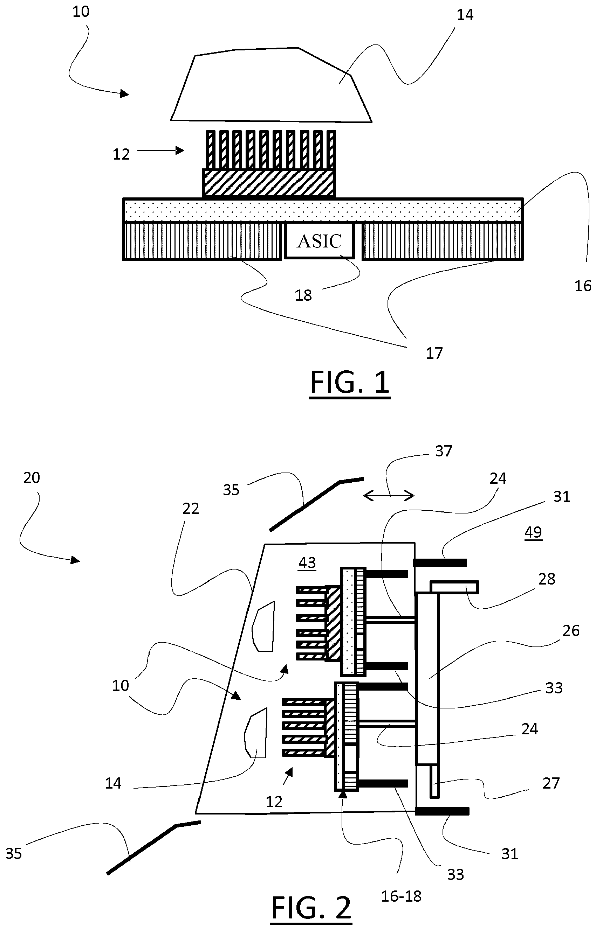

La FIG. 1 montre schématiquement un module optique 10 selon cet exemple. Le module optique 10 comprend une source lumineuse 12 constituée d'un système de diode tridimensionnelle (3D), une lentille 14 qui peut éventuellement coopérer avec la source lumineuse 12 pour générer un faisceau de lumière, une plaque silicium comprenant une zone 16 configurée pour accueillir une source lumineuse (la zone 16 accueillant dans l'exemple de la figure la source lumineuse 12) et une zone 17 constituée d'un élément conducteur pouvant être muni éventuellement de micro-caloducs formant un dissipateur thermique. Les micro-caloducs sont particulièrement efficaces en termes de dissipation thermique. La zone 17 est équipée de micro-caloducs ou de caloduc qui peuvent être connectés pour former un circuit permettant de communiquer (i.e. conduire) la chaleur hors du support (par exemple en se connectant au système de communication (ou conduction) de chaleur mentionné plus tard). Alternativement, la zone 17 pourrait former dissipateur thermique d'une autre manière, par exemple par le biais d'un circuit liquide intégré, voire par convection naturelle. De tels exemples sont simples à réaliser. La plaque intègre également le circuit intégré 18. L'ensemble 16-18 de l'exemple forme ainsi un support configuré pour le montage d'une unique source lumineuse sur une platine mécanique accueillant la mécanique de réglage, mais cette platine mécanique peut être adaptée pour accueillir plusieurs sources lumineuses, de manière classique.

Différents exemples du projecteur sont maintenant discutés en référence aux FIGS 2-5.

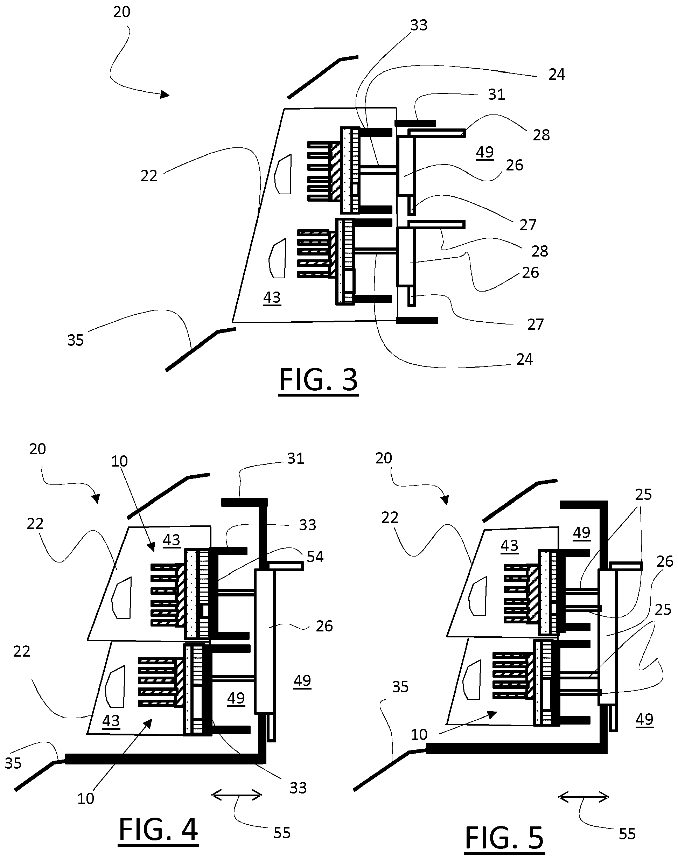

Les FIGS. 2-5 montrent toutes un exemple différent de projecteur 20 de lumière de véhicule tel que décrit ci-dessus, et comprenant au moins un boîtier 22 (un unique boîtier 22 dans l'exemple des FIGS. 2-3 et deux boîtiers 22 distincts dans l'exemple des FIGS. 4-5) et intégrant deux modules optiques 10 selon l'exemple décrit en référence à la FIG. 1 (un module optique 10 par boîtier dans le cas des FIGS. 4-5). Dans tous les exemples montrés par les FIGS. 2-5, le système d'évacuation de chaleur comprend au moins un échangeur de chaleur 26-28 par fluide (par exemple un échangeur de chaleur par liquide ou « échangeur de chaleur liquide » de type plaque froide, avec potentiellement un étalement de chaleur par microcaloduc et/ou « radiateur »). Un échangeur de chaleur par fluide peut constituer un système permettant de transférer de l'énergie thermique d'un solide par la circulation d'un fluide vers un échangeur. Une telle plaque froide reliée à un échangeur de chaleur permet une bonne dissipation de la chaleur générée dans le boîtier 22, et notamment une évacuation de chaleur meilleure que par convection (même forcée).

En particulier et comme déjà indiqué en référence à la FIG. 1, chaque module 10 est équipé d'un élément conducteur de chaleur 17 configuré pour dissiper la chaleur générée par le module et/ou l'étaler (comme cela est bien connu du domaine de l'électronique de puissance). L'élément conducteur 17 dissipant/étalant la chaleur est connecté à un système de communication (ou conduction) de chaleur 24 ou 25 qui amène cette chaleur à l'échangeur de chaleur de type plaque froide 26-28. Le système de communication de chaleur 24,25 relie ainsi le support de source lumineuse 16-18 et l'échangeur de chaleur 26-28, de sorte à évacuer la chaleur générée et/ou emmagasinée par le support de source lumineuse 16-18 (chaleur qui est donc à l'intérieur 43 du boîtier 22) vers l'extérieur 49 du boîtier. En effet, comme on le voit sur les FIGS. 2-5, l'échangeur de chaleur 26-28 est situé à l'extérieur 49 du boîtier 22.

Dans les exemples des figures, l'échangeur de chaleur par fluide comprend en particulier une plaque froide 26 (c'est-à-dire une plaque pouvant être refroidie par un circuit de refroidissement, « cold plate » ou « cooling plate » en anglais). Ce type d'échangeur de chaleur (e. g. par liquide) bien connu est simple à réaliser et convient particulièrement bien, en termes de géométrie et de caractéristiques mécaniques, à une telle application pour projecteur de lumière de véhicule. La plaque froide 26 est donc située (au moins partiellement, c'est-à-dire intégralement ou partiellement) à l'extérieur 49 du boîtier 22, de sorte à rendre particulièrement efficace l'évacuation de la chaleur. Dans l'exemple des FIGS. 2-3, la plaque 26 est fixée contre le fond du boîtier 22 (relativement à la direction du faisceau lumineux). Cette configuration participe à une bonne rigidité mécanique de l'ensemble et une installation simple du projecteur 20, la plaque 26 pouvant être préassemblée au boîtier 22, l'ensemble étant alors emboîté dans la zone du véhicule prévue à cet effet. Dans cette configuration, la plaque 26 pourrait alternativement former une paroi (e. g. du fond) du boîtier 22. Dans l'exemple des FIGS. 4-5, la plaque 26 est distante du fond du boîtier 22 d'une distance 55, lequel fond du boîtier 22 est plaqué contre une platine support 54 correspondante du véhicule. Cette configuration permet la formation un mur d'air entre la plaque froide 26 et le boîtier et formant isolant thermique, réduisant ainsi l'effet thermique en provenance de l'extérieur 49 vers le boîtier 22.

Dans les exemples des figures, chaque échangeur de chaleur comprend en outre une entrée de fluide 27 (par exemple liquide) et une sortie de fluide 28 (par exemple liquide). Cela permet de relier l'échangeur de chaleur de chaleur à un circuit de refroidissement (par exemple liquide). Le fluide du circuit de refroidissement maintient ainsi la plaque 26 de l'échangeur à une température basse, de sorte à continuellement évacuer la chaleur à l'intérieur du boîtier 22. En particulier, dans un exemple, le circuit de refroidissement peut être un circuit de refroidissement du véhicule, ce qui rend le dispositif simple à réaliser et optimise la gestion des ressources (plutôt que de développer un circuit dédié). Relativement aux projecteurs de lumière classique sans un tel système d'évacuation de chaleur, le projecteur 20 de ces exemples nécessite uniquement pour son installation l'opération supplémentaire de relier la ou les plaques 26 au circuit de refroidissement en question, par le biais du système de connexion comprenant la ou les entrée(s) 27 et la ou les sortie(s) 28 (qui peuvent être flexibles, et/ou système de connexion pouvant comprendre en outre un circuit de circulation de fluide, par exemple flexible, par exemple des tuyaux reliés au circuit de refroidissement). Ainsi, l'échangeur de chaleur des exemples des figures peut être alimenté par la boucle de refroidissement basse température (inférieure à 90°C) ou haute température, voire les deux selon les besoins de la régulation thermique. Une connexion au circuit de refroidissement que constitue la boucle de refroidissement basse température du véhicule (bien connue et généralement présente, notamment sur tous les véhicules électriques ou hybrides) permet de maintenir la température du fluide par exemple à une température maximum de 45°C environ.

Le projecteur 20 des exemples permet donc de dissiper la chaleur en dehors 49 du boîtier 22 en utilisant par exemple les boucles de refroidissement déjà existantes sur le véhicule (FIGS. 4 et 5). Le projecteur 20 étant dans un volume plus petit, l'intérieur 43 du boîtier 22 se retrouve à une température homogène. Cela permet de limiter la présence de zone de froid de la glace pouvant générer des risques de condensation. Par ailleurs, la configuration des exemples permet également d'avoir un circuit de refroidissement externe au boîtier 22, ce qui limite le risque de générer de la pollution à l'intérieur du projecteur 20, par exemple en cas de fuite. La réparation s'en trouve aussi facilitée. En s'associant à une boucle de refroidissement déjà existante on réduit par ailleurs le poids du projecteur 20 en évitant d'avoir un système de refroidissement interne au projecteur.

Le boîtier 22 des exemples contient donc plusieurs modules optiques 10 (deux exactement, un faisant office de feu de position et l'autre faisant office de feu de croisement et/ou route) liés à un échangeur refroidi par liquide (plaque froide). L'échangeur de chaleur par fluide peut être réalisé en un seul ensemble (c'est-à-dire avec une seule plaque 26 à laquelle sont liés tous les modules optiques), comme c'est le cas dans l'exemple des FIGS. 2, 4 et 5, ou alternativement en plusieurs sous ensemble (c'est-à-dire avec plusieurs plaques 26, chaque module 10 étant lié à une plaque 26 respective, chaque plaque 26 ayant son entrée 27 et sortie 28 respectives), comme c'est le cas dans l'exemple de la FIG. 3. Dans le cas 4 et 5 les modules ne nécessitent de réglage l'un par rapport à l'autre dans le boitier. Le réglage est directement réalisé par le système de réglage extérieur au boitier 22 de manière conventionnelle.

Les FIGS. 4 et 5 représentent un exemple permettant de réduire plus l'effet d'auto échauffement d'un module à l'autre. Dans cet exemple, les modules 10 sont définis comme des produits étanches avec leur propre boîtier 22 et leur propre système de réglage assemblé sur une structure. Chacun des modules 10 est relié comme décrit ci-dessus à une plaque froide 26. La plaque froide 26 est commune aux modules dans les exemples. Mais il pourrait y avoir une plaque froide 26 par module 10 et donc par boîtier 22, comme expliqué en référence à la FIG. 3. Une telle plaque 26 individuelle à chaque module pourrait être plaquée contre le fond du boîtier 22 (comme dans l'exemple de la FIG. 3 ou rester à une distance 55 (entre la plaque 26 et la platine support 54).

Dans tous les exemples montrés par les figures, le projecteur est monté sur le véhicule grâce à des éléments mécaniques 31 figés par rapport à la carcasse/ossature 35 du véhicule et à des éléments mécaniques 33 (ainsi que la platine 54 dans les exemples des FIGS. 4 et 5) réglables en position par rapport à la carcasse/ossature 35 du véhicule. Les éléments 33 appartiennent au système de réglage en position de la source lumineuse par rapport au véhicule dont les autres éléments ne sont pas montrés sur les figures, par souci de clarté. Ces autres éléments impliquent toutefois dans les exemples un minimum de jeu (i.e. distance 37, représentée sur la FIG. 2 uniquement) entre les supports 16-18 et la plaque froide 26 (par exemple supérieur à 1 cm, par exemple de l'ordre de 2 cm). Ainsi, dans les exemples des FIGS. 2-3, les modules 10 sont réglables en position par rapport au véhicule à l'intérieur de leur boîtier 22 commun, le boîtier 22 commun étant lui-même fixe (i.e. figé) par rapport au véhicule. Au contraire, dans les exemples des FIGS. 4-5, ce sont les boîtiers 22 respectifs à un module 10 individuel qui sont réglables en position par rapport au véhicule, le module 10 respectif à chaque boîtier 22 étant lui-même fixe par rapport audit boîtier 22 respectif.

Dans tous les exemples représentés par les figures, le ou les échangeur(s) de chaleur 26-28 est (sont) fixe(s) par rapport au véhicule. Dès lors, le système de communication de chaleur 24,25 représenté peut être flexible, ce qui permet d'assurer la mobilité des supports 16-18. Si au contraire, l'échangeur de chaleur était fixe par rapport au support de source lumineuse 16-18 (ce qui peut être une alternative aux exemples des figures), le système de communication de chaleur 24,25 représenté pourrait indifféremment être flexible ou rigide (la flexibilité par rapport au véhicule pouvant alors, dans le cas d'un système de communication de chaleur 24,25 rigide, être fournie par une partie flexible du système de connexion à un circuit de refroidissement du véhicule, par exemple les entrée 27 et sortie 28 ou des éléments s'y reliant, tel qu'expliqué précédemment).

Dans les exemples des FIGS. 2-4, le système de communication de chaleur comprend un caloduc 24. Cela permet une communication/conduction de la chaleur particulièrement efficace depuis chaque support 16-18 vers la plaque froide 26 correspondante. En outre, le caloduc 24 peut facilement être formé flexible et ainsi autoriser le réglage en position du support 16-18 (si nécessaire). Au contraire de ces exemples, la FIG. 5 présente l'alternative (au lieu d'utiliser un caloduc 24 relié à la plaque froide) de réaliser un échangeur liquide 25-28 à double entrée: avec un circuit liquide 25 pour refroidir chaque module et le circuit externe 27-28 mentionné précédemment.

## Revendications

1. Projecteur (20) de lumière de véhicule comprenant au moins un boîtier (22), au moins un support (16-18) de source lumineuse (12) situé à l'intérieur du boîtier, un système de réglage en position de la source lumineuse par rapport au véhicule, et un système d'évacuation de chaleur (24,25-28), depuis l'intérieur (43) du boîtier vers l'extérieur (49) du boîtier.

2. Projecteur selon la revendication 1, dans lequel le système d'évacuation de chaleur (24,25-28) comprend un système de communication de chaleur (24, 25) flexible.

3. Projecteur selon la revendication 1 ou 2, dans lequel le système d'évacuation de chaleur (24,25-28) comprend au moins un échangeur de chaleur (26-28) par fluide et un système de communication de chaleur (24, 25) reliant le support (16-18) de source lumineuse et l'échangeur de chaleur par fluide.

4. Projecteur selon la revendication 3, dans lequel l'échangeur de chaleur (26-28) par fluide est un échangeur de chaleur par liquide.

5. Projecteur selon l'une des revendications 3 ou 4, dans lequel l'échangeur de chaleur par fluide comprend un système de connexion (27-28) à un circuit de refroidissement.

6. Projecteur selon la revendication 5, dans lequel le circuit de refroidissement est une boucle de refroidissement basse température du véhicule.

7. Projecteur selon l'une des revendications 3 à 6, dans lequel l'échangeur de chaleur par fluide comprend une plaque froide (26).

8. Projecteur selon la revendication 7, dans lequel la plaque froide est située à l'extérieur du boîtier ou forme une paroi du boîtier.

9. Projecteur selon l'une quelconque des revendications 3 à 8, dans lequel l'échangeur de chaleur par fluide est fixe par rapport au véhicule, le système de communication de chaleur étant flexible.

10. Projecteur selon l'une quelconque des revendications 3 à 8, dans lequel l'échangeur de chaleur par fluide est fixe par rapport au support de source lumineuse, le système de communication de chaleur étant flexible ou rigide.

11. Projecteur selon l'une quelconque des revendications 2 à 10, dans lequel le système de communication de chaleur (24, 25) comprend un caloduc (24) et/ou un circuit de circulation de fluide (25).

12. Projecteur selon l'une quelconque des revendications 1 à 11, dans lequel le projecteur comprend deux supports de source lumineuse, les supports de source lumineuse étant situés tous deux à l'intérieur d'un même boîtier ou chacun à l'intérieur d'un boîtier respectif, le projecteur comprenant un échangeur de chaleur par fluide commun aux deux supports de source lumineuse ou un échangeur de chaleur par fluide respectif pour chaque support de source lumineuse.
